# FASCICULE DE BREVET EUROPEEN

(11) **EP 2 000 356 B1**
(45) Date de publication et mention de la délivrance du brevet: **20.01.2010**
(21) Numéro de dépôt: 08305228.2
(22) Date de dépôt: 03.06.2008
(51) Int. Cl.: B60Q 1/30, B60Q 1/48

(54) **Avertisseur lumineux**
Leuchtanzeige
Illuminated warning

(30) Priorité: 08.06.2007 FR 0755616
(43) Date de publication de la demande: 10.12.2008
(73) Titulaire: PEUGEOT CITROËN AUTOMOBILES S.A., 78140 Vélizy Villacoublay (FR)
(72) Inventeur: Lefranc, Francis, 92150, Suresnes (FR); Bertrand, Anne-Cécile, 94230, Cachan (FR)

(56) Documents cités:
- DE-A1- 10 012 098
- DE-C1- 10 120 150
- DE-U1- 9 304 256
- FR-A- 2 409 885
- US-A1- 2003 111 906
- US-A1- 2005 099 287

## Description

La présente demande de brevet concerne un afficheur lumineux destiné à être intégré dans les moyens lumineux d'un véhicule automobile pour avertir les autres participants à la circulation routière d'une manoeuvre imminente en relation avec une place de stationnement, à savoir l'activité de recherche d'une telle place, l'activité d'entrée dans une telle place ou l'activité de sortie d'une telle place.

Actuellement, lorsqu'un conducteur cherche une place de parking, il roule lentement et est prêt de s'arrêter à tout moment. Eventuellement, il met le clignotant du côté de la route où il cherche la place de parking, mais il n'est pas sûr si les autres participants à la circulation routière comprennent la signification de cette indication.

De même, lorsqu'un conducteur entre dans une place de parking, il met le clignotant du côté de la voiture sur lequel est situé la place libre et il commence la manoeuvre de stationnement. La manoeuvre de stationnement commence généralement par l'enclenchement de la marche arrière ce qui entraîne, en plus du fonctionnement du clignotant, l'allumage des feux de recul. Selon la difficulté de faire rentrer le véhicule dans la place de stationnement trouvée, il y a une plus ou moins grande suite d'enclenchements de marche avant et marche arrière jusqu'à ce que le conducteur estime avoir bien garé son véhicule. Lors de la manoeuvre et le temps que celle-ci n'est pas terminée, le conducteur ne peut pas être sûr si les autres participants à la circulation routière reconnaissent bien et surtout suffisamment tôt que sa manoeuvre est une manoeuvre de stationnement en cours d'exécution.

Et lorsqu'un conducteur veut sortir son véhicule automobile d'une place de stationnement, il met le clignotant du côté de son véhicule sur lequel se trouve la file de circulation avant de débarquer sur cette file de circulation. Puisque, au début de la manoeuvre, le véhicule automobile ne se trouve pas sur la file de circulation, les autres participants à la circulation routière qui voient éventuellement le clignotant, ne peuvent pas savoir s'il s'agit vraiment du clignotant ou si les feux de détresse ont été allumés.

Quelle que soit donc la manoeuvre concernée, c'est-à-dire la recherche d'une place de stationnement, l'entrée dans une telle place ou la sortie d'une telle place, il y a à chaque fois un risque que la signalisation actuellement utilisée par les conducteurs des véhicules automobiles ne soit pas comprise par les autres participants à la circulation routière.

Les documents DE 10012098 A et DE 10120150 C proposent des avertisseurs lumineux spécifiques indiquant une intention de se garer mais ils ne suffisent pas à résoudre ce problème.

Le but de l'invention est de proposer une solution qui permette d'informer clairement les autres participants à la circulation, notamment les participants suivant directement le véhicule, de la manoeuvre imminente.

Le but de l'invention est atteint avec un avertisseur lumineux destiné à être intégré dans les moyens lumineux d'un véhicule automobile pour avertir les autres participants à la circulation routière d'une manoeuvre imminente en relation avec une place de stationnement, à savoir l'activité de recherche d'une telle place, l'activité d'entrée dans une telle place ou l'activité de sortie d'une telle place, l'avertisseur comprenant une première mémoire destinée à tenir à disposition d'une unité de commande de l'avertisseur des critères caractérisant le début et la fin respectivement d'une recherche d'une place de stationnement, de l'entrée dans une telle place et de la sortie d'une telle place, une deuxième mémoire destinée à tenir à disposition de l'unité de commande des stratégies spécifiques pour chacune des trois manoeuvres, des capteurs et d'autres sources de signaux électriques destinés à fournir à l'unité de commande des signaux électriques permettant de reconnaître à la fois le début de l'une quelconque des trois manoeuvres et l'identité de la manoeuvre, l'unité de commande étant conformée pour pouvoir déterminer sur la base desdits signaux électriques et des critères en mémoire, le début de l'une quelconque des trois manoeuvres, l'identité de la manoeuvre et la fin de celle-ci, et pour pouvoir engendrer des signaux de commande et les envoyer aux moyens lumineux du véhicule pour produire par ces moyens lumineux l'avertissement recherché.

L'avertisseur de l'invention est conçu de manière à utiliser les moyens lumineux généralement présents sur un véhicule automobile, notamment les feux réglementaires tels les feux de stop, les clignotants et les feux de recul. En ce qui concerne les feux de stop, l'avertisseur de l'invention se sert plus particulièrement du troisième feu de stop qui est intégré dans les voitures récentes à la fabrication, et qui peut être installé en accessoire sur les autres voitures.

La conception de l'avertisseur de l'invention est fondée sur les réflexions suivantes. Chacune des trois manoeuvres en relation avec une place de stationnement, à savoir l'activité de recherche d'une telle place, l'activité d'entrée dans une telle place, et l'activité de sortie d'une telle place commence avec des gestes ou des actions typiques et suffisamment distinctifs les uns des autres. Pour être activé, l'avertisseur doit donc identifier d'abord l'identité de l'action imminente. Autrement dit, l'avertisseur détermine d'abord s'il s'agit d'une recherche d'une place de stationnement, de l'entrée dans une telle place ou de la sortie d'une telle place. Pour chacune de ces trois manoeuvres, l'avertisseur a enregistré les gestes typiques qui lui permettent d'identifier la manoeuvre imminente.

Ainsi, en s'approchant d'une place susceptible de pouvoir servir comme place de stationnement pour son véhicule automobile, le conducteur va ralentir son véhicule et va activer le clignotant. Si le véhicule est équipé d'une fonction qui permet de mesurer une place de stationnement et de dire s'il est possible de faire entrer le véhicule dans cette place, il va activer cette fonction. Le fait de remplir ces deux ou trois fonctions, selon le mode de réalisation choisi, permet à l'avertisseur, par comparaison avec des données enregistrées dans une première mémoire d'identifier l'identité de la manoeuvre, ici donc la recherche d'une place de stationnement, et de choisir dans une deuxième mémoire la stratégie de signalisation ou d'avertissement approprié.

Il en est de même lorsque le conducteur d'un véhicule automobile a trouvé une place de stationnement et s'apprête à y faire entrer son véhicule. Cette fois-ci, les gestes ou actions spécifiques permettant à l'avertisseur d'identifier la manoeuvre comme une manoeuvre d'entrée dans la place de stationnement consiste en l'activation de la marche arrière et l'activation du clignotant.

De manière analogue, lorsque le conducteur veut faire sortir son véhicule d'une place de stationnement, le conducteur va d'abord ouvrir une porte de son véhicule pour y entrer, il va démarrer le moteur, il va désactiver le frein à main et il va enfin activer le clignotant. Lorsque toutes ces conditions ont été remplies, l'avertisseur reconnaît la manoeuvre comme une manoeuvre de sortie d'une place de stationnement et choisit la stratégie correspondante.

Dans chacune des trois stratégies, l'avertisseur engendre des signaux de commande appropriés et les envoie aux moyens lumineux prévus du véhicule pour produire à l'aide de ces moyens lumineux l'avertissement recherché. L'avertissement lumineux spécifique est maintenu actif jusqu'à ce que l'avertisseur reçoive un signal électrique lui indiquant la fin de la manoeuvre.

La fin de la manoeuvre peut être une fin définitive lorsque le conducteur a trouvé une place de stationnement et commence l'entrée dans cette place de stationnement où l'action d'entrée dans cette place de stationnement se termine par exemple par l'arrêt du moteur. Et lorsqu'il s'agit de la sortie de la place de stationnement, l'augmentation de la vitesse du véhicule au-delà d'un seuil prédéterminé ou l'arrêt du clignotant ou la présence des deux traités ensemble peuvent être un critère indiquant à l'avertisseur la fin de la manoeuvre de sortie de la place de stationnement. Un autre critère peut être une distance parcourue au-delà d'un seuil prédéterminé ou l'arrêt du clignotant ou la présence des deux traités ensemble. Un autre critère peut être celui de la présence d'un signal de freinage indiquant alors une interruption de la manoeuvre, ce qui est néanmoins interprété par l'avertisseur comme une fin définitive de la procédure. Lorsque le conducteur veut ou peut continuer la manoeuvre, l'avertisseur recommence avec la signalisation spécifique lorsque les conditions pour l'identification de la manoeuvre et le début de la manoeuvre sont remplies.

L'avertisseur de l'invention comprend par ailleurs avantageusement une troisième mémoire dans laquelle peuvent être stockées des signalisations spécifiques pour chacune des trois manoeuvres.

Il va sans dire que l'avertisseur peut tout aussi bien comprendre un micro processeur ou tout autre circuit électronique dans lequel les trois mémoires décrites ci avant sont réunies en une seule mémoire.

La signalisation spécifique pour chacune des trois manoeuvres est réalisée par l'utilisation du troisième feu de stop. A cet effet, le troisième feu de stop comprend plusieurs segments dont la plus grande partie est utilisée pour remplir en premier les conditions posées par la réglementation de la circulation routière. On entend par segment une source lumineuse de type LED, un groupement de LED, une lampe, **...** et tous ces éléments le cas échéant en association avec un réflecteur, un diffuseur, un filtre, ou un guide optique.

Dans le cas de segments d'extrémités multicolores, ceux-ci peuvent être intégrés à la zone remplissant la fonction de troisième feu de stop pour permettre d'optimiser la surface de celui-ci. La zone remplissant la fonction de troisième feu de stop est constituée de plusieurs segments dont les caractéristiques telles la puissance lumineuse et la taille sont établies pour que la fonction de troisième feu de stop soit conforme à la réglementation, même si un des segments est éteint.

Avantageusement, le troisième feu des feux de stop, comprend deux segments d'extrémités supplémentaires ayant avantageusement une couleur différente de celle des autres segments, par exemple orange, pour améliorer la compréhension de la signalisation. Lorsque la signalisation spécifique pour la manoeuvre identifiée est activée, les segments du troisième feu de stop sont allumés successivement dans la direction du côté où est activé le clignotant. On peut aussi prévoir un allumage successif de tous les segments et ensuite de la totalité des segments et ainsi de suite.

Si le véhicule est équipé d'un dispositif de mesurage de place de stationnement et lorsque ce dispositif, préalablement activé par le conducteur, estime qu'une place de stationnement permet de garer le véhicule et si le conducteur ralentit, c'est-à-dire lorsque la vitesse du véhicule devient inférieure à un seuil prédéterminé, une autre signalisation peut être activée, par exemple les feux de recul, pour faire comprendre aux autres usagers de laisser de la place pour faire la manoeuvre. Avantageusement, et notamment pour éviter une confusion avec un mouvement de marche arrière, les feux de recul vont être activés par exemple en discontinu.

En même temps que la nouvelle signalisation est activée, par exemple les feux de recul, la signalisation de l'activité de recherche est maintenue.

La désactivation de cette nouvelle signalisation peut être déclenchée par la désactivation du clignotant, une vitesse supérieure à un seuil prédéterminé ou une distance parcourue supérieur à un seuil prédéterminé.

L'avertisseur lumineux de l'invention est par ailleurs conçu de manière à pouvoir désactiver ces différentes fonctions à tout moment, par exemple par une pression sur la pédale de frein. Dans ce cas, la fonction d'allumage des feux de stop est prioritaire sur le pilotage des segments du troisième feu de stop et va donc allumer tous les segments réglementaires attribués à la fonction du troisième feu de stop. A l'arrêt du freinage, c'est-à-dire s'il n'y a plus de pression sur la pédale de frein, si la signalisation spécifique est toujours active, le troisième feu de stop repartira dans un allumage successif de ces segments.

Lorsqu'une place de stationnement a été trouvée et lorsqu'il s'agit de faire entrer le véhicule dans cette place de stationnement, le conducteur place son véhicule sur une voie parallèle à la place de stationnement et à la fin de celui-ci et enclenche la marche arrière pour la première fois et recule dans la place de stationnement. Ensuite, le conducteur fait avancer le véhicule, puis le fait reculer, puis à nouveau avancer, etc.... jusqu'à ce que celui-ci soit bien garé. Par cette manoeuvre, il enclenche successivement la marche arrière et la première vitesse, et cela éventuellement à plusieurs reprises, jusqu'à ce que le véhicule soit bien garé. A chaque fois, l'enclenchement de la première vitesse tout comme l'enclenchement de la vitesse arrière assure le maintien de la fonction de signalisation spécifique pour entrer dans une place de stationnement.

En même temps, lors du premier enclenchement de la marche arrière, l'avertisseur de l'invention mémorise la distance parcourue par le véhicule jusqu'à ce que celui-ci s'arrête et passe en marche avant. Cette distance mémorisée est multipliée par un coefficient pour permettre de désactiver la fonction d'avertissement, au cas où la fonction de signalisation spécifique aurait été activée lors d'une manoeuvre qui ne correspond pas à un cas de manoeuvre d'entrée dans une place de stationnement. Par exemple, lorsqu'un conducteur a activé le clignotant droit pour tourner à droite, mais qu'il est obligé de faire une marche arrière pour éviter un autre véhicule qui vient juste de s'arrêter devant lui et qui l'empêche donc de passer, dans cette situation la signalisation spécifique va s'activer alors que le conducteur ne souhaite pas faire rentrer son véhicule dans une place de stationnement.

La désactivation de la fonction de signalisation spécifique pour entrer dans une place de stationnement peut être faite sur
- activation du frein à main, lorsque la manoeuvre est terminée ;
- activation du clignotant opposé ;
- dépassement, en marche avant, de la distance enregistrée dans la mémoire ; ou
- sur une durée, si les clignotants sont désactivés.

Durant l'activation de la fonction de la signalisation spécifique pour l'entrée dans une place de stationnement, les feux de recul s'activent en continu pendant une marche arrière et ils s'activent en discontinu lorsque le véhicule est en marche avant ou lorsque la boîte de vitesses est au point mort, pour éviter toute confusion avec le mouvement de marche arrière, mais pour faire comprendre aux autres usagers que le véhicule est toujours en train d'effectuer une manoeuvre de stationnement.

En cas de sortie d'une place de stationnement, une signalisation spécifique est activée vers le côté du véhicule où est activé le clignotant. Cette signalisation spécifique peut être agencée de deux manières différentes. Selon la première, une séquence d'allumage spécifique des différents segments du troisième feu de stop est déterminée. Et lorsque le conducteur doit freiner, qu'il s'agisse d'un freinage en raison des circonstances à la circulation ou qu'il s'agisse de la nécessité de devoir reculer à l'intérieur de la place de stationnement avant de pouvoir sortir définitivement, le freinage interrompt la signalisation spécifique. Lorsque la pression sur la pédale de frein est annulée, la signalisation spécifique recommence.

Selon la seconde manière, une séquence d'allumage de différents segments du troisième feu de stop est définie pour le cas où il n'y a pas de pression sur la pédale de frein et une autre séquence est déterminée pour le cas où, pendant la manoeuvre de sortie de la place de stationnement, une pression est exercée sur la pédale de frein. La séquence d'allumage en cas de freinage peut être en quelque sorte une inversion de la séquence sans pression sur la pédale de frein, comme cela sera expliqué plus loin en référence aux dessins.

On peut tout aussi bien prévoir un allumage successif de tous les éléments et ensuite de la totalité des segments et ainsi de suite.

La désactivation de la fonction de signalisation spécifique pour une sortie d'une place de stationnement peut être faite, par exemple, par .
- dépassement d'un seuil de vitesse ;
- activation du clignotant opposé ;
- dépassement d'un seuil de distance parcourue en marche avant ou en marche arrière ; ou
- par dépassement d'une durée prédéterminée d'immobilité du véhicule.

Durant l'activation de la fonction de signalisation spécifique pendant la sortie d'une place de stationnement, les feux de recul s'activent en continu lorsque le véhicule est en marche arrière et les feux de recul s'activent en discontinu lorsque le véhicule est en marche avant ou lorsque la boîte de vitesses est au point mort, pour éviter toute confusion avec un mouvement de marche arrière, mais pour faire comprendre que le véhicule est toujours dans la manoeuvre de sortie de parking.

D'autres caractéristiques et avantages de la présente invention ressortiront de la description ci-après d'un mode de réalisation d'un avertisseur lumineux selon l'invention. La description est faite en référence aux dessins dans lesquels :
- la figure 1 représente un troisième feu de stop selon l'invention ;
- les figures 2, 3 et 4 représentent des stratégies d'avertissement déterminant la conception de l'avertisseur de l'invention ; et
- les figures 5 à 8 représentent des exemples d'allumage successifs d'un troisième feu de stop par l'avertisseur de l'invention.

L'avertisseur lumineux de l'invention est conçu de manière à être intégré dans les moyens lumineux d'un véhicule automobile et utilise donc un troisième feu de stop déjà existant dans un véhicule donné ou qui est à rajouter en tant qu'élément accessoire aux moyens lumineux existants du véhicule. L'avertisseur de l'invention utilise par ailleurs aussi les clignotants et les feux de recul, ainsi que les feux de frein pour des signalisations spécifiques prévues pour les différentes situations décrites plus haut.

L'avertisseur lumineux de l'invention utilise enfin aussi des capteurs et d'autres sources de signaux électriques du véhicule initialement prévus pour d'autres fonctions et permettant accessoirement de fournir à une unité de commande de l'avertisseur lumineux des signaux électriques typiques pour chacune des trois situations autour d'une place de stationnement, c'est-à-dire la recherche d'une place de stationnement, l'entrée dans une place de stationnement et la sortie d'une place de stationnement.

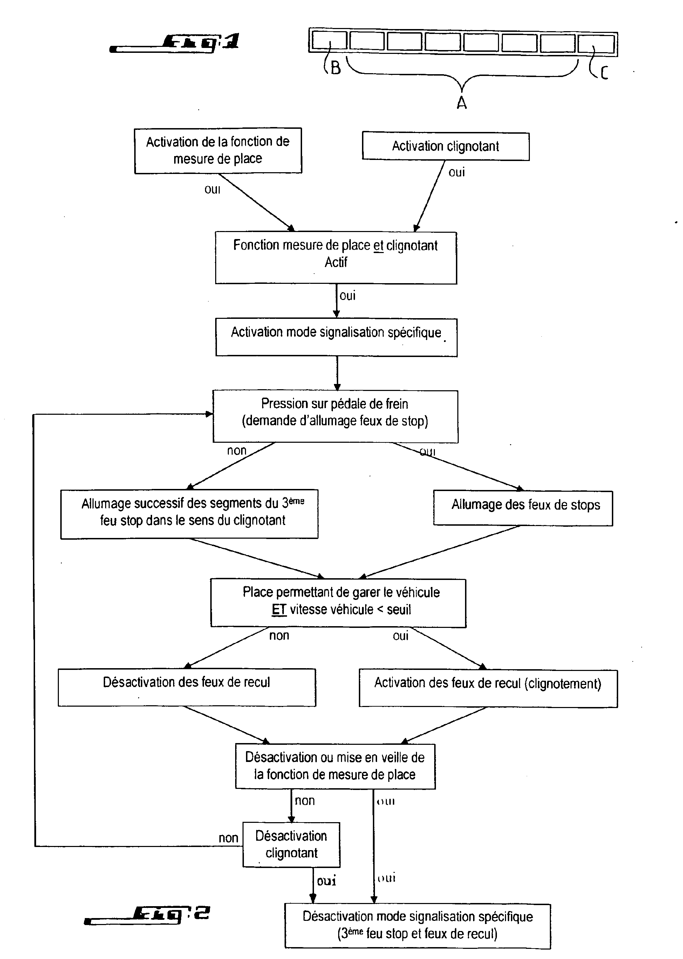

Selon l'exemple représenté sur la figure 1, un troisième feu de stop comporte six segments réglementaires, sommairement référencés en A. Cet ensemble de segments A remplit les conditions de la réglementation actuelle d'un troisième feu de stop en ce qui concerne notamment la taille et la puissance lumineuse d'un tel troisième feu. Le nombre de segments de l'ensemble A n'est bien sûr pas limité à six.

Pour augmenter les possibilités de signalisations spécifiques pour l'avertisseur, l'invention propose d'ajouter à chacune des deux extrémités opposées de l'ensemble de segments A un segment B ou C. Dans l'exemple représenté sur la figure 1, le troisième feu de stop comprend ainsi six segments « intérieurs » formant l'ensemble de segments A et deux segments « extérieurs », à savoir un segment B à gauche et un segment C à droite. Alors que les segments A fonctionnent en priorité en troisième feu de stop et notamment selon les critères imposés par la réglementation actuelle, les deux segments « extérieurs » sont réservés à l'utilisation par l'avertisseur lumineux de l'invention. Avantageusement, mais non nécessairement, les deux segments extérieurs ont une couleur différente de la couleur des autres segments, par exemple une couleur orangée ou sont bicolores avec par exemple comme première couleur identique à la couleur des segments A et en deuxième couleur une couleur orangée.

La figure 2 représente une stratégie ou un principe de fonctionnement de l'avertisseur lumineux de l'invention dans le cas d'une manoeuvre de recherche d'une place de stationnement.

Lorsque le conducteur d'un véhicule automobile cherche une place de stationnement, il ralentit le véhicule et il active, comme cela est supposé dans la stratégie représentée sur la figure 2, la fonction « mesure de place » installée dans le véhicule. De plus, il active le clignotant vers le côté du véhicule où il cherche une place de stationnement.

Selon une alternative non représentée, la présence simultanée d'un ralentissement du véhicule en dessous d'un seuil prédéterminé et l'activation du clignotant sont utilisés comme critère permettant d'activer la signalisation spécifique prévue pour la recherche d'une place de stationnement.

Dans l'exemple choisi pour la figure 2, la présence simultanée de l'activation de la fonction « mesure de place » et le clignotant activé permettent d'activer la signalisation spécifique lors de la recherche d'une place de stationnement.

Par ailleurs, comme cela ressort de la comparaison des trois stratégies représentées sur les figures 2 à 4 respectivement pour la recherche d'une place de stationnement, pour l'entrée dans une telle place et la sortie d'une telle place, la combinaison décrite d'une activation de la mesure de place ou du ralentissement en dessous d'un seuil prédéterminé de vitesse avec l'activation d'un clignotant sont des critères typiques permettant à une unité de commande de l'avertisseur d'identifier la manoeuvre comme une manoeuvre de recherche d'une place de stationnement. Les deux autres manoeuvres seront identifiées par d'autres critères.

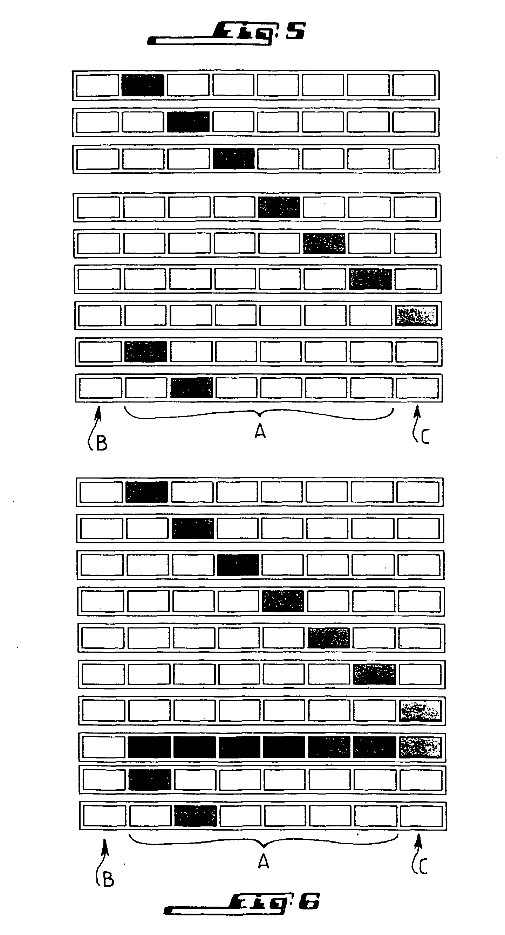

Lorsqu'une signalisation spécifique est activée, comme cela sera décrit en référence aux figures 5 et suivantes, ce mode de fonctionnement reste activé le temps qu'aucune pression n'est exercée sur la pédale de frein, c'est-à-dire le temps que le conducteur ne freine pas et les feux de stop réglementaires ne s'allument pas. Si une pression est exercée sur la pédale de frein, les feux de stop, y compris le troisième feu de stop, s'allument puisqu'ils sont prioritaires dans cette fonction par rapport aux autres fonctions pour lesquelles ils sont éventuellement utilisés, comme ici la fonction d'avertissement.

Le temps qu'aucune pression n'est exercée sur la pédale de frein, il y a un allumage successif des différents segments du troisième feu de stop, dans le sens du clignotant.

Lorsqu'une place de stationnement est repérée et lorsque la vitesse du véhicule est passée en dessous d'un seuil prédéterminé, qui est éventuellement un second seuil si un premier seuil est utilisé pour définir un ralentissement en vue de la recherche d'une place de stationnement, l'unité de commande déclenche en plus de l'allumage successif des segments du troisième feu de stop, une activation des feux de recul qui sont alors allumés en clignotement. En même temps, la fonction de mesure de place est désactivée ou pour le moins mise en veille. La fonction de mesure de place est également désactivée ou mise en veille lorsque les feux de recul sont désactivés par suite d'une nouvelle accélération du véhicule.

Lorsque la fonction de mesure de place n'est pas désactivée ni mise en veille et le clignotant n'est pas désactivé non plus, l'unité de commande retourne dans sa stratégie à l'emplacement où elle interroge si une pression est exercée sur la pédale de frein ou non.

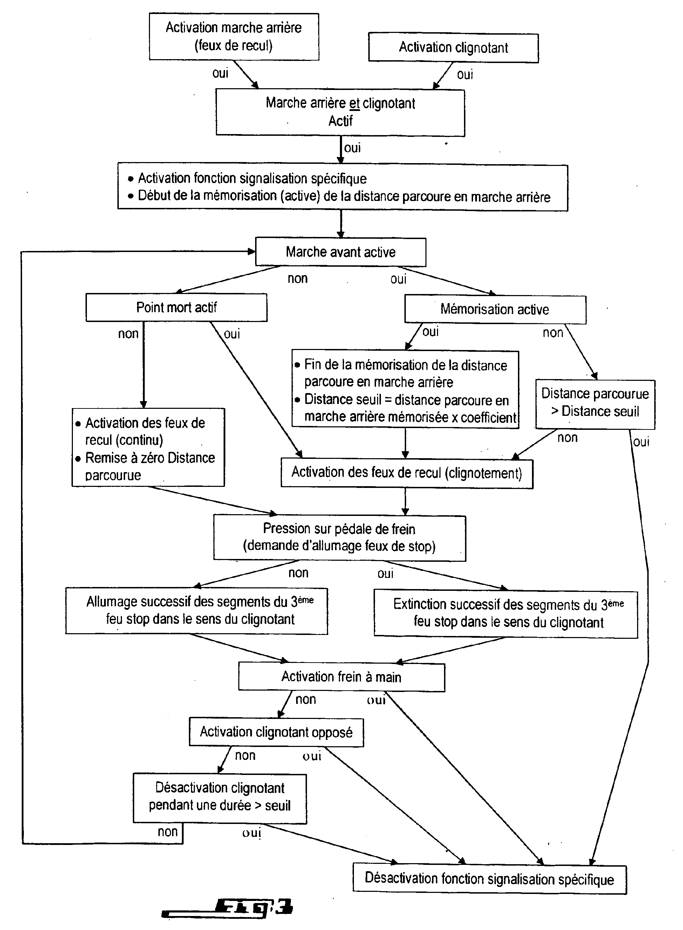

Comme cela est représenté sur la figure 3, les deux critères qui permettent d'identifier la manoeuvre comme une manoeuvre d'entrée dans une place de stationnement et dont la présence simultanée permet d'activer la fonction de signalisation spécifique pour l'entrée dans une place de stationnement, sont l'activation de la marche arrière et des feux de recul en continu et l'activation du clignotant vers le côté du véhicule où la place de stationnement a été trouvée.

Lorsque la signalisation spécifique pour l'entrée dans une place de stationnement est activée, l'unité de commande de l'avertisseur active la mémorisation de la distance que le véhicule va parcourir en marche arrière jusqu'au changement de vitesse en marche avant. Cette mémorisation est faite à l'aide d'une troisième mémoire destinée à toutes les tâches courantes qui sont exécutées au cours du fonctionnement de l'avertisseur.

Lorsque le véhicule s'arrête, l'unité de commande interroge si la marche avant a été activée ou si la boîte de vitesses est au point mort. Si la marche avant a été activée, mais si la mémorisation de la distance parcourue en marche arrière n'est plus active puisque la distance parcourue a dépassé un seuil préétabli, le mouvement du véhicule n'est plus considéré comme une manoeuvre de stationnement et la fonction de signalisation spécifique est désactivée.

Si par contre, à l'arrêt du véhicule, la marche avant est activée et la mémorisation de la distance parcourue en marche arrière est toujours active, la mémorisation de la distance parcourue en marche arrière est terminée et la distance mesurée du parcours en marche arrière est multipliée par un coefficient qui est déterminé pour permettre au véhicule de parcourir une distance en marche avant pour terminer la manoeuvre de parking sans désactivation de la fonction, par exemple le coefficient est compris entre 0,5 et 2.

L'activation des feux de recul en clignotement peut être obtenue dans les deux situations suivantes de la manoeuvre : premièrement, lorsque, à l'arrêt du véhicule, la marche avant a été activée mais la mémorisation active de la distance parcourue en marche arrière n'est plus active bien que la distance parcourue soit toujours inférieure à la distance seuil, et, en second, lorsque, à l'arrêt du véhicule, la marche avant n'est pas activée puisque la boîte de vitesses est au point mort.

Pendant que les feux de recul sont en clignotement, l'exercice d'une pression sur la pédale de frein inverse l'allumage successif des segments du troisième feu de stop dans le sens qu'il y a une extinction successive de ces éléments dans le sens du clignotement ou allume tous les segments du troisième feu de stop alors que, lorsqu'il n'y a aucune pression sur la pédale de frein, il y a un allumage successif des segments du troisième feu de stop dans le sens du clignotant.

Notons par ailleurs que, lorsque le véhicule est à l'arrêt et la marche avant n'est pas active et le point mort n'est pas actif non plus, c'est-à-dire la marche arrière est toujours engagée, les feux de recul sont activés en continu et le compteur de la distance parcourue en marche arrière est remise à zéro. Ensuite, si aucune pression n'est exercée sur la pédale de frein, l'allumage successif des segments du troisième feu de stop dans le sens du clignotant est activé ou, si au contraire il y a une pression sur la pédale de frein, le mode inverse, c'est-à-dire l'extinction successive des éléments du troisième feu de stop dans le sens du clignotant ou l'allumage de tous les éléments du troisième feu de stop est activée.

Ensuite, en fonction de la présence de l'un ou de l'autre des critères ci-après, à savoir activation du frein à main, activation du clignotant opposé et désactivation du clignotant pendant une durée supérieure à un seuil prédéterminé, il est considéré que la manoeuvre d'entrée dans une place de stationnement est terminée et que la fonction de signalisation spécifique à entrer dans une place de stationnement est désactivée. Dans le cas contraire, c'est-à-dire s'il n'y a ni activation du frein à main ni activation du clignotant opposé ni encore désactivation du clignotant pendant une durée supérieure à un certain seuil, l'unité de commande retourne dans la stratégie à l'étape de l'arrêt du véhicule et interroge à nouveau si la marche avant est active ou non etc.

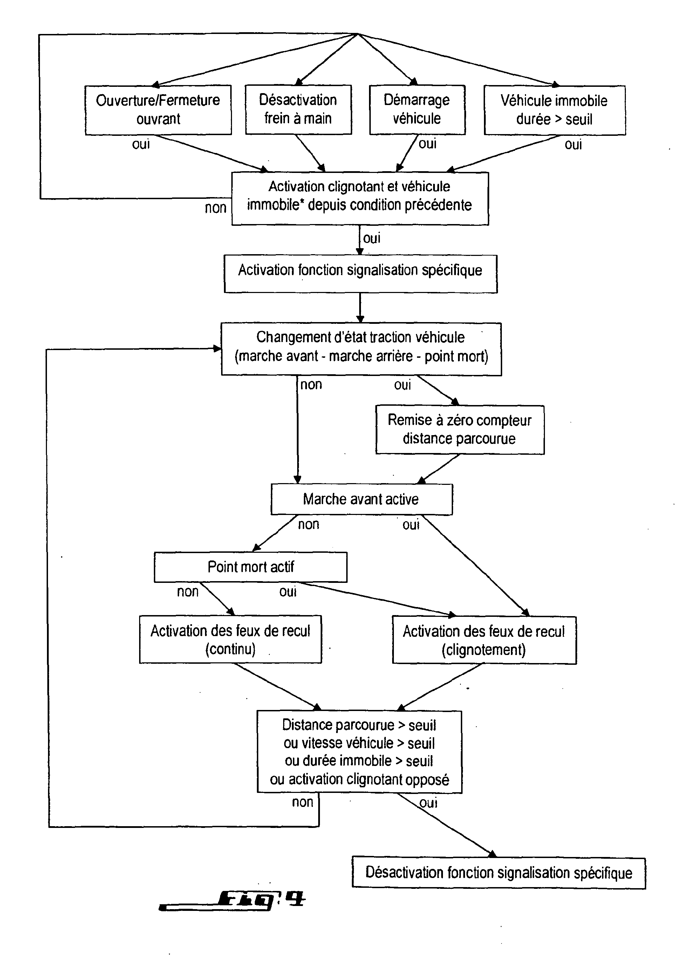

Comme cela est visible sur la figure 4, qui représente la stratégie d'un avertissement en cas de sortie d'une place de stationnement, cette manoeuvre est identifiée grâce à au moins un des quatre critères suivants : ouverture, puis fermeture d'une porte du véhicule, désactivation du frein à main, démarrage du moteur du véhicule et véhicule immobile pendant une durée supérieure à un seuil prédéterminé. Ainsi, lorsqu'un capteur d'ouverture de porte ou le contacteur installé à la porte et commandant la lumière intérieure du véhicule signale une ouverture d'une porte, notamment la porte du conducteur, ou le frein à main est désactivé, ou le moteur démarré ou le véhicule a été immobilisé pendant une durée supérieure à un seuil prédéterminé, cela permet à l'unité de commande de l'avertisseur de l'invention d'identifier la manoeuvre imminente comme une manoeuvre de sortie d'une place de stationnement. Et lorsque l'unité de commande constate en plus que le clignotant a été activé et que le véhicule est toujours immobile, c'est-à-dire qu'il n'a parcouru aucune distance ou au maximum une distance très faible, par exemple quelques mètres, l'unité de commande active la fonction de signalisation spécifique d'une manoeuvre de sortie d'une place de stationnement.

Ensuite, lorsque l'unité de commande constate un changement d'état de traction du véhicule, c'est-à-dire enclenchement d'une marche avant, de la marche arrière ou la mise au point mort, le compteur de la distance parcourue est remise à zéro et les feux de recul sont activés en clignotement si la marche avant est active.

De même, si aucun changement d'état de l'attraction du véhicule n'a eu lieu et la boîte de vitesses est au point mort, les feux de recul sont activés en clignotement. Si par contre la boîte de vitesses est en marche arrière, les feux de recul sont activés en continu.

La fonction de signalisation spécifique pour la sortie d'une place de stationnement est désactivée lorsque la distance parcourue après démarrage du véhicule est supérieure à un seuil prédéterminé ou si la vitesse du véhicule est supérieure à un seuil prédéterminé où la durée d'immobilisation du véhicule est supérieure à un seuil prédéterminé. L'autre possibilité pour la désactivation de la fonction signalisation spécifique est l'activation du clignotant en sens opposé.

Les figures 5 à 8 représentent très schématiquement, dans un ordre chronologique du haut de chacune des figures au bas de celles-ci, l'allumage ou l'extinction successive des segments d'un troisième feu de stop dans le cas d'un avertissement lumineux selon l'invention.

Pendant la recherche d'une place de stationnement, comme la figure 5 le montre, les segments du troisième feu de stop s'allument successivement dans la direction du clignotant activé, ici vers le côté droit. On observe plus particulièrement qu'un cycle d'allumage des éléments du troisième feu de stop consiste à allumer successivement les six éléments réglementaires ou intérieurs, puis le segment extérieur droit ; ensuite un nouveau cycle commence.

Selon la figure 6, il est également possible qu'un cycle d'allumage des éléments du troisième feu de stop, typique pour la recherche d'une place de stationnement, consiste à allumer successivement les six éléments intérieurs, puis le segment extérieur droit puis l'ensemble des six éléments intérieurs et de l'élément extérieur droit.

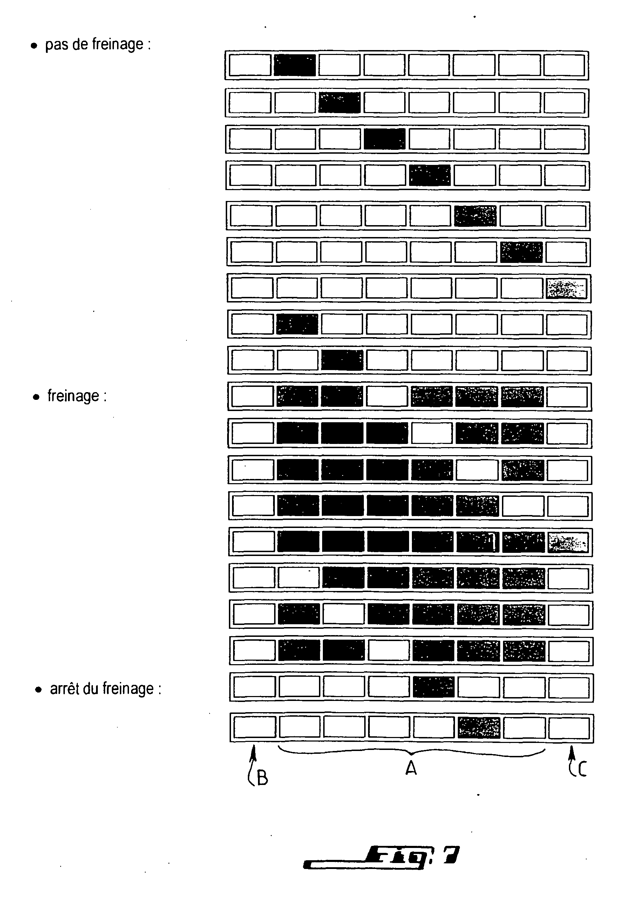

Dans le cas d'une entrée dans une place de stationnement, les allumages suivants, représentés sur la figure 7, sont possibles :
- en l'absence de freinage, les segments du troisième feu de stop sont allumés successivement dans la direction du clignotant, ici vers le côté droit du véhicule. Et cette séquence se répète jusqu'à ce que la signalisation spécifique soit désactivée ;
- en cas de freinage, l'unité de commande allume tous les segments réglementaires du troisième feu de stop et éteint successivement les uns après les autres, les segments du troisième feu. Après l'extinction du dernier segment du troisième feu de stop, le segment extérieur droit est allumé et en même temps le cycle d'extinction successif des segments recommence. L'arrêt du freinage est indiqué par un allumage successif de deux des segments du troisième feu de stop.

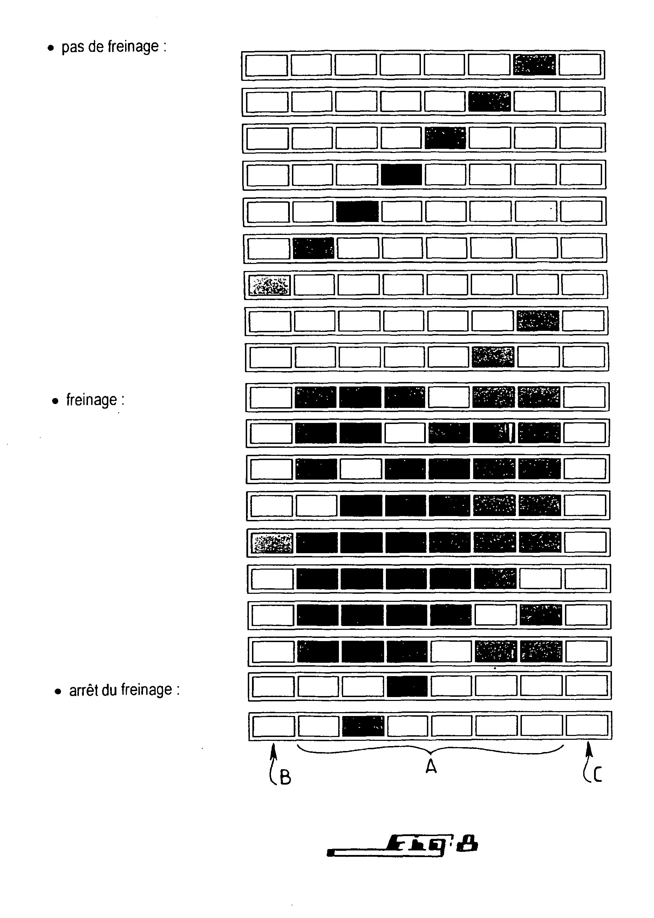

En cas de sortie d'une place de stationnement, les segments du troisième feu de stop sont allumés successivement les uns après les autres, comme représenté sur la figure 8, dans la direction du clignotant, ici vers le côté gauche, lorsqu'il y a absence de freinage.

Et en cas de freinage, il y inversion du motif d'allumage, c'est-à-dire tous les segments réglementaires du troisième feu de stop sont allumés et ils sont éteints successivement les uns après les autres dans le sens du clignotant, ici donc vers le côté gauche.

L'arrêt du freinage est indiqué, comme à l'entrée dans une place de stationnement, par allumage successif de deux des segments du troisième feu de stop dans le sens du clignotant.

## Revendications

1. Avertisseur lumineux destiné à être intégré dans les moyens lumineux d'un véhicule automobile pour avertir les autres participants à la circulation routière d'une manoeuvre imminente en relation avec une place de stationnement, à savoir l'activité de recherche d'une telle place, l'activité d'entrée dans une telle place ou l'activité de sortie d'une telle place,
**caractérisé en ce qu'**il comprend une première mémoire destinée à tenir à disposition d'une unité de commande de l'avertisseur des critères caractérisant le début et la fin respectivement d'une recherche d'une place de stationnement, de l'entrée dans une telle place et de la sortie d'une telle place,
une deuxième mémoire destinée à tenir à disposition de l'unité de commande des stratégies spécifiques pour chacune des trois manoeuvres,
des capteurs et d'autres sources de signaux électriques destinés à fournir à l'unité de commande des signaux électriques permettant de reconnaître à la fois le début de l'une quelconque des trois manoeuvres et l'identité de la manoeuvre,
l'unité de commande étant conformée pour pouvoir déterminer sur la base desdits signaux électriques et des critères en mémoire, le début de l'une quelconque des trois manoeuvres, l'identité de la manoeuvre et la fin de celle-ci, et pour pouvoir engendrer des signaux de commande et les envoyer aux moyens lumineux du véhicule pour produire par ces moyens lumineux l'avertissement recherché.

2. Avertisseur selon la revendication 1, **caractérisé en ce que** les capteurs comprennent au moins un capteur de vitesse du véhicule, un capteur d'ouverture et/ou de fermeture de porte du véhicule et un capteur de marche arrière du véhicule.

3. Avertisseur selon la revendication 1 ou 2, **caractérisé en ce que** les autres sources de signaux électriques comprennent au moins la commande des clignotants du véhicule, la commande des feux de stop du véhicule et la commande des feux de recul du véhicule.

4. Avertisseur selon l'une quelconque des revendications 1 à 3, **caractérisé en ce que** les autres sources de signaux électriques comprennent la commande de démarrage du véhicule.

5. Avertisseur selon l'une quelconque des revendications 1 à 4, **caractérisé en ce que** les capteurs comprennent des moyens permettant de mesurer des temps d'immobilisation du véhicule, à moteur tournant.

6. Avertisseur selon l'une quelconque des revendications 1 à 5, **caractérisé en ce que** les capteurs comprennent des moyens permettant de mesurer une distance parcourue par le véhicule.

7. Avertisseur selon l'une quelconque des revendications 1 à 6, **caractérisé en ce que** les moyens lumineux du véhicule comprennent un troisième feu stop.

8. Avertisseur selon l'une quelconque des revendications 1 à 7, **caractérisé en ce que** les moyens lumineux comprennent des feux de recul.

9. Véhicule automobile, **caractérisé en ce qu'**il comprend un avertisseur selon l'une quelconque des revendications 1 à 8.

10. Procédé de commande de moyens lumineux d'un véhicule automobile pour avertir les autres participants à la circulation routière d'une manoeuvre imminente en relation avec une place de stationnement, à savoir rechercher une telle place, entrer dans une telle place ou sortir d'une telle place, le procédé comprenant au moins les étapes suivantes :
comparer des signaux électriques venant de capteurs et d'autres sources de signaux électriques caractérisant le début de l'une quelconque des trois manoeuvres et l'identité de la manoeuvre, avec des données stockées dans une première mémoire et formant des critères caractérisant le début et la fin respectivement d'une recherche d'une place de stationnement, de l'entrée dans une telle place et de la sortie d'une telle place, et déterminer l'identité de la manoeuvre,
choisir parmi des stratégies spécifiques pour chacune des trois manoeuvres stockées dans une deuxième mémoire, celle qui est attribuée à la manoeuvre identifiée et
appliquer la stratégie choisie et engendrer des signaux de commande et les envoyer aux moyens lumineux du véhicule pour produire par ces moyens lumineux l'avertissement recherché.

## Claims

1. Visual warning device intended for integration in the lighting means of a motor vehicle to warn other road users that the vehicle is about to make a manoeuvre with respect to a parking space, that is the act of searching for such a space, the act of entering such a space, or the act of leaving such a space,
**characterized in that** it includes a first memory intended to supply a control unit of the warning device with criteria that define the beginning and end respectively of the search for a parking space, entering such a space, and leaving such a space,
a second memory intended to supply the control unit with specific strategies for each of the three manoeuvres,
sensors and other sources of electrical signals intended to transmit electrical signals to the control unit to enable it to recognise immediately the beginning of any of the three manoeuvres, and to identify the manoeuvre,
the control unit being configured such that is able to determine the beginning of any of the three manoeuvres, to identify the manoeuvre and to detect the end thereof on the basis of such electrical signals and the criteria stored in the memory, and such that it is able to generate command signals and send them to the lighting means of the vehicle causing such lighting means to create the desired warning.

2. Warning device as recited in claim 1, **characterized in that** the sensors include at least one sensor of the vehicle's speed, one sensor for detecting the act of opening and/or closing a vehicle door, and one sensor for reversing operations in the vehicle.

3. Warning device as recited in either of claims 1 or 2, **characterized in that** the other sources of electrical signals include at least the command to the vehicle's direction indicators, the command to the vehicle's brake lights, and the command to the vehicle's reversing lights.

4. Warning device as recited in any of claims 1 to 3, **characterized in that** the other sources of electrical signals include the command for starting the vehicle.

5. Warning device as recited in any of claims 1 to 4, **characterized in that** the sensors include means for enabling measurement of the time for which the vehicle is stationary with the engine running.

6. Warning device as recited in any of claims 1 to 5, **characterized in that** the sensors include means for enabling measurement of a distance travelled by the vehicle.

7. Warning device as recited in any of claims 1 to 6, **characterized in that** the lighting means of the vehicle include a third brake light.

8. Warning device as recited in any of claims 1 to 7, **characterized in that** the lighting means include reversing lights.

9. Motor vehicle, **characterized in that** it includes a warning device as recited in any of claims 1 to 8.

10. Process for controlling lighting means of a motor vehicle to warn other road users that the vehicle is about to make a manoeuvre with respect to a parking space, that is the act of searching for such a space, entering such a space, or leaving such a space, the process consisting of at least the following steps:
comparing the electrical signals received from sensors and other sources of electrical signals characterizing the beginning of any of the three manoeuvres and the identity of the manoeuvre, with data stored in a first memory, and forming criteria that characterize the beginning and the end respectively of an activity of searching for a parking space, entering such a space, and leaving such a space, and identifying the manoeuvre,
choosing the strategy that is associated with the manoeuvre identified from the specific strategies for each of the three manoeuvres stored in a second memory, and
applying the chosen strategy and generating command signals and sending them to the lighting means of the vehicle to produce the desired warning via the said means.

## Patentansprüche

1. Leuchtwarnvorrichtung, die zum Einbauen in Leuchtmittel eines Kraftfahrzeugs bestimmt ist, um die anderen Verkehrsteilnehmer über ein bevorstehendes Manöver in Zusammenhang mit einem Parkplatz zu warnen, nämlich die Aktivität des Suchens eines solchen Platzes, die Einfahraktivität in einen solchen Platz oder die Ausfahraktivität aus einem solchen Platz,
**dadurch gekennzeichnet, dass** sie einen ersten Speicher aufweist, der dazu bestimmt ist, für eine Steuereinheit der Warnvorrichtung Kriterien, die jeweils den Anfang und das Ende einer Suche eines Parkplatzes, des Einfahrens in einen solchen Platz oder des Herausfahrens aus einem solchen Platz charakterisieren, bereit zu halten,
einen zweiten Speicher, der dazu bestimmt ist, für die Steuereinheit spezifische Strategien für jedes der drei Manöver bereit zu halten,
Sensoren und andere Quellen elektrischer Signale, die dazu bestimmt sind, der Steuereinheit elektrische Signale zu liefern, die es erlauben, sowohl den Anfang eines der drei Manöver als auch die Identität des Manövers zu erkennen,
wobei die Steuereinheit ausgebildet ist, um auf der Grundlage der elektrischen Signale und der Kriterien im Speicher den Anfang eines der drei Manöver, die Identität des Manövers und dessen Ende bestimmen zu können, und um Steuersignale erzeugen zu können und sie and die Leuchtmittel des Fahrzeugs zu senden, um durch diese Leuchtmittel die angestrebte Warnung zu erzeugen.

2. Warnvorrichtung nach Anspruch 1, **dadurch gekennzeichnet, dass** die Sensoren mindestens einen Geschwindigkeitssensor des Fahrzeugs, einen Türöffnungs- und/oder -schließsensor des Fahrzeugs und einen Rückfahrsensor des Fahrzeugs aufweisen.

3. Warnvorrichtung nach Anspruch 1 oder 2, **dadurch gekennzeichnet, dass** die anderen Quellen elektrischer Signale mindestens das Steuern der Blinklichter des Fahrzeugs, das Steuern der Bremsleuchten des Fahrzeugs und das Steuern der Rückfahrscheinwerfer des Fahrzeugs umfassen.

4. Warnvorrichtung nach einem der Ansprüche 1 bis 3, **dadurch gekennzeichnet, dass** die anderen Quellen elektrischer Signale die Startsteuerung des Fahrzeugs umfassen.

5. Warnvorrichtung nach einem der Ansprüche 1 bis 4, **dadurch gekennzeichnet, dass** die Sensoren Mittel aufweisen, die es erlauben, Stillstandszeiten des Fahrzeugs bei drehendem Motor zu messen.

6. Warnvorrichtung nach einem der Ansprüche 1 bis 5, **dadurch gekennzeichnet, dass** die Sensoren Mittel aufweisen, die es erlauben, eine von dem Fahrzeug zurückgelegte Entfernung zu messen.

7. Warnvorrichtung nach einem der Ansprüche 1 bis 6, **dadurch gekennzeichnet, dass** die Leuchtmittel des Fahrzeugs eine dritte Bremsleuchte umfassen.

8. Warnvorrichtung nach einem der Ansprüche 1 bis 7, **dadurch gekennzeichnet, dass** die Leuchtmittel Rückfahrscheinwerfer aufweisen.

9. Kraftfahrzeug, **dadurch gekennzeichnet, dass** es eine Warnvorrichtung nach einem der Ansprüche 1 bis 8 aufweist.

10. Verfahren zum Steuern von Leuchtmitteln eines Kraftfahrzeugs, um die anderen Verkehrsteilnehmer über ein bevorstehendes Manöver in Zusammenhang mit einem Parkplatz zu warnen, nämlich das Suchen eines solchen Platzes, das Einfahren in einen solchen Platz oder das Herausfahren aus einem solchen Platz, wobei das Verfahren mindestens die folgenden Schritte aufweist:
Vergleichen der elektrischen Signale, die von Sensoren kommen, und anderer Quellen elektrischer Signale, die den Anfang eines der drei Manöver und die Identität des Manövers charakterisieren, mit Daten, die in einem ersten Speicher gespeichert sind und Kriterien bilden, die jeweils den Anfang und das Ende einer Suche eines Parkplatzes, des Einfahrens in einen solchen Platz und des Herausfahrens aus einem solchen Platz und des Bestimmens der Identität des Manövers charakterisieren,
für jedes der drei Manöver, die in einem zweiten Speicher gespeichert sind, Auswählen aus den spezifischen Strategien der Strategie, die dem identifizierten Manöver zugewiesen ist, und
Anwenden der ausgewählten Strategie und Erzeugen von Steuersignalen und Senden dieser an die Leuchtmittel des Fahrzeugs, um mit diesen Leuchtmitteln die angestrebte Warnung zu erzeugen.
